(19) Europäisches Patentamt
European Patent Office
Office européen des brevets

(11) **EP 2 747 020 A1**

(12) **EUROPEAN PATENT APPLICATION**

(43) Date of publication:
**25.06.2014 Bulletin 2014/26**

(51) Int Cl.:
***G06Q 30/02*** (2012.01)

(21) Application number: **12199235.8**

(22) Date of filing: **21.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fundacio Barcelona Digital Centre
Tecnologic
08018 Barcelona (ES)**

(72) Inventors:
• **Villatoro Segura, Daniel
08031 Barcelona (ES)**

• **Gimenez Esteban, Rafael
08901 L'Hospitalet (Barcelona) (ES)**
• **Torrent Moreno, Marc
08390 Montgat (Barcelona) (ES)**
• **Mena Roldan, Jose
08020 Barcelona (ES)**
• **Planaguma I Valls, Marc
08302 Mataró (Barcelona) (ES)**
• **Pous Marin, Marc
81925 Munich (DE)**

(74) Representative: **Mohammadian, Dario
Bardehle Pagenberg
Avenida Diagonal 420 1-1
08037 Barcelona (ES)**

(54) **Method and apparatus for providing recommendations**

(57)      Optimized recommendations take into account factors that give a hint about the likelihood of a good or service being bought by a potential user, for example, factors collected from user-related parameters. Once this type of information is collected and filtered, it is taken into account resulting in an optimized recommender apparatus to provide users with recommendations they are more likely to follow. Additionally, the end user is provided a filtered shortlist resulting in a more pleasant user experience whilst the network infrastructure is freed from unnecessary capacity usage by point of interest information overload and dumping.

**FIG. 1**

**Description**

**TECHNICAL FIELD**

This application relates generally to retrieving content from a pool of available content, and more specifically, but not exclusively, to a recommendation apparatus for improved point of interest retrieval.

**BACKGROUND OF THE INVENTION**

The present invention focuses in information recommenders, in which users are recommended points of interest, POI, to visit. A POI comprises a geographical location such as cinemas, restaurants, museums, and so on. End users are provided with a tailored recommendation to visit the physical site.

Systems which generally provide recommendations are known which provide various types of recommendations in order to help an end user choose a certain content from a pool of available content (for example advertisements in web pages, recommendations in smartphone applications, a particular restaurant, and so on). These recommendations are either provided without any user input, or may also be filtered based upon certain evaluations and input provided by the end user or other content.

In practice, there is an extremely large number of potential services and goods that can be offered to users. With the advent of content provision via mobile communications, the amount of potential targets and content available for a single user has multiplied in number. Finding ones way among such pool of content can be a tiring and cumbersome experience for an end user. This might result in the user aborting the content retrieval experience in order to save energy and bother.

Therefore there is a need for effective techniques for identifying amongst goods and services those that potential users are more prone to be interested in. In particular, there is a need for providing an optimized recommender system for points of interest.

**SUMMARY**

It is therefore an object of the present invention to provide solutions to the above mentioned problems. In particular it is the objective of the invention to provide methods and apparatus for providing optimized recommendations of POI to end users.

The optimized recommendations take into account factors that give a hint about the likelihood of a good or service being bought by a potential user, for example, the location of the potential user, opinion about the good or service of previous customers related to the potential user, and so on. Once this type of information is collected and filtered, it is taken into account resulting in a more evolved recommender apparatus to provide users with recommendations they are more likely to follow. Additionally, the end user is provided a filtered shortlist resulting in a more pleasant user experience.

In particular, it is the object of the present invention to provide an apparatus for recommending points of interest to end users which takes into account user-related parameters.

It is another object of the present invention to provide a method for recommending points of interest to end users which takes into account user-related parameters.

It is an object of the present invention to provide a computer-readable medium configured to store instructions, which when executed on a computer, performs a method for recommending points of interest to end users which takes into account user-related parameters.

The invention provides methods and devices that implement various aspects, embodiments, and features of the invention, and are implemented by various means. For example, these techniques may be implemented in hardware, software, firmware, or a combination thereof.

For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (e.g. procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, and other apparatuses and elements that implement various aspects, configurations and features of the invention, as described below.

**BRIEF DESCRIPTION OF THE DRAWING(S)**

The features and advantages of the present invention become more apparent from the detailed description set forth below when taken in conjunction with the drawings in which like reference characters identify corresponding elements in the different drawings. Corresponding elements may also be referenced using different characters.

FIG. 1 depicts a scenario in which the user might need a recommendation.

FIG. 2 depicts an apparatus according to another aspect of the present invention.

FIG. 3 depicts more details of the apparatus of FIG. 2.

FIG. 4 depicts more details of the apparatus of FIG. 2.

FIG. 5 depicts an apparatus according to another aspect of the present invention.

FIG. 6 depicts more details of the apparatus of FIGs. 2 to 5.

**DETAILED DESCRIPTION OF THE INVENTION**

A user in a location may be offered a plurality of goods and services. Accordingly, when a user is in a location the system may not know which, from the plurality of goods and services that is possible to offer to the user will be of higher interest to the user and therefore the likelihood of the user following the recommendation would be higher. Various techniques are described herein for resolving such unawareness.

It will be apparent to those skilled in the art that the detailed examples in the description are merely exemplary, and that concepts like point of interest POI may comprise both geographical (cinemas, restaurants, museums, and so on) and virtual positions (virtual shops, on-line newspapers, and so on).

In some aspects the present invention utilizes an additional dimension of the user's parameter space, namely any user-related information, in order to optimise the filtering of a shortlist from among a full set of candidate POIs. The user-related parameter can comprise any single one, or combination of, a social parameter representing the social aspect and the user's social relationships, the past history of a specific user, the current location of a user, a social distance to other similar users, the user's expertise in the area where the recommendation is going to be provided. Based upon these user-related parameters, an aggregation function is determined, which expresses the foreseeable likelihood of a user visiting a certain POI given its distance to the POI, the past history of a user and his/her friends and their knowledge of the area.

This combination of social (based upon the relationship between users in a social network) and geographical (knowledge of an area of the users, the frequency of attendance of the users to different areas, etc.) information allows the system of the present invention to provide recommendations the users of the system are more likely to follow.

Taking advantage of the recommendations based on the knowledge of an area (both geographical and virtual) and the social relations between users (recovered from a social network) the present invention aims to provide POI recommendations they are more likely to follow.

In yet another aspect of the invention POI agent is created, which is able to accept subjective valuation parameters from POI owners who want to self-promote their POIs and attempt to push their POI higher in the ranking of the recommendation set.

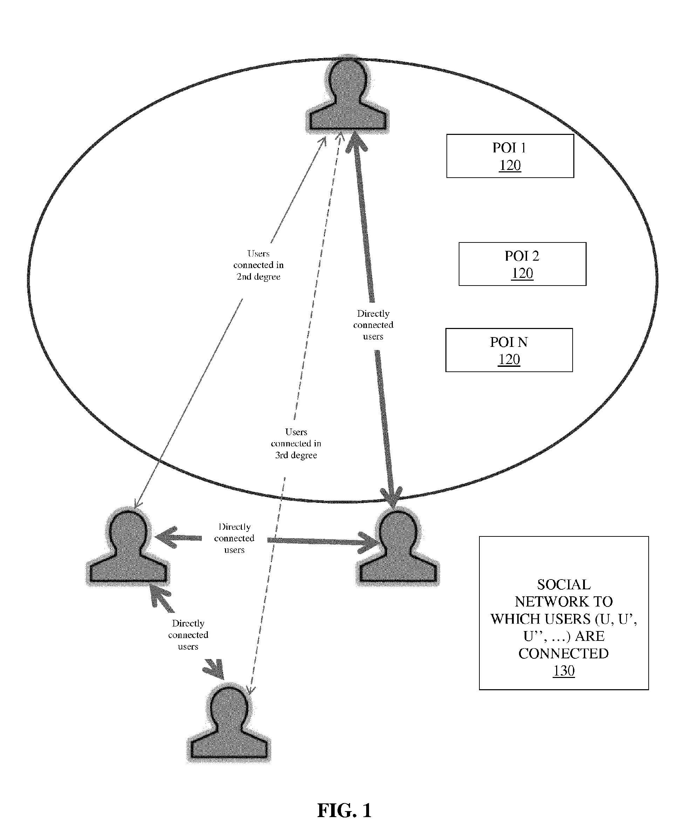

FIG. 1 is an exemplary diagram showing the main actors of the system 100 of the present invention. A target user U 110 is in an area, where several points of interest 120 POIs L, L', L" are comprised. Several other users U', U", are socially connected to user U, whose information is going to be used to provide recommendations to user U. It will apparent to those skilled in the art that POIs may comprise both geographical and virtual locations. The target user, and the other users in the system, may be related to each other via a social network 130. Within this social network, and different social network programs or applications, the different users may be related to each other in a directly (as represented by the bold arrow), with 2 degrees of separation (as represented by the thin fixed arrow), 3 degrees of separation (as represented by the dotted arrow), up to N degrees of separation.

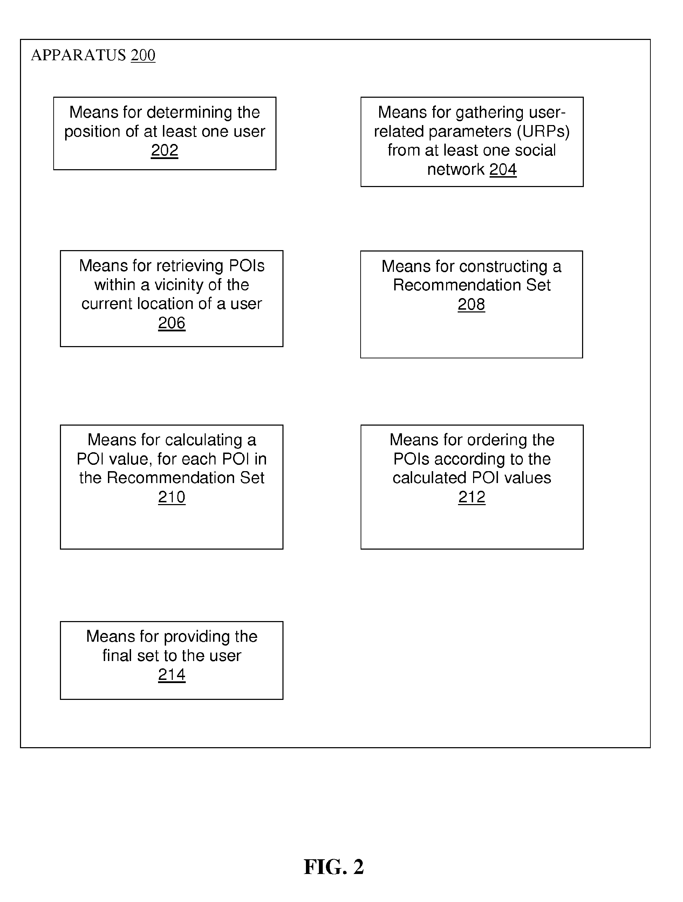

FIG. 2 depicts a recommender apparatus 200 according to one aspect of the present invention. The apparatus comprises means 202 for determining the location of a user. It will be apparent to those skilled in the art that the location of a user may comprise both geographical (latitude and longitude coordinates) and virtual (current http:// being browsed) locations.

The recommender apparatus comprises means for retrieving at least one POI based on the determined location of the at least one user and means for constructing a recommendation set with all the retrieved POIs for each user. Additionally the recommender apparatus comprises means for determining and assigning at least one point of interest value for each POI in the recommendation set and means for ordering the at least one POI according to the at least one determined point of interest value. Finally, the recommender apparatus comprises means for providing the ordered set to the respective one of the at least one user.

In one aspect the apparatus further comprises means 204 for collecting user-related parameters (URPs). The term URP comprises but is not limited to social relations of a user, information of physical and virtual locations a user and the users socially related to him/her have visited in the past, etc.

As mentioned, the recommender apparatus comprises means 206 for retrieving points of interest POIs within a vicinity or area of the current location of a user. It will be apparent to those skilled in the art that the aforementioned vicinity may comprise geographical locations within a radius from the actual position of a user (e.g., cinemas, restaurants, museums in nearby locations).

The means 208 for constructing a recommendation set comprises the POIs retrieved. This information will be used by other components of the system to reach the goal of providing recommendations to users. The means 210 for determining a location value determined for each POI in the recommendation set based upon the user-related parameters.

In some aspects of the present invention the recommender apparatus comprises means for determining metrics based on the user-related parameters. These URPs may comprise different metrics related to the past behavior of users. The different metrics may comprise, but are not limited to, metrics representing how often a user has visited in the past a specific POI or an area comprising several inter-related POIs, and metrics representing the social importance of users to another users.

The apparatus further 212 comprises means for ordering the POIs according to the determined POI values from the highest to lowest POI value. The underlying concept is that by means of accurate metrics related to social and locational information of users, recommendations that users are more likely to follow will be provided.

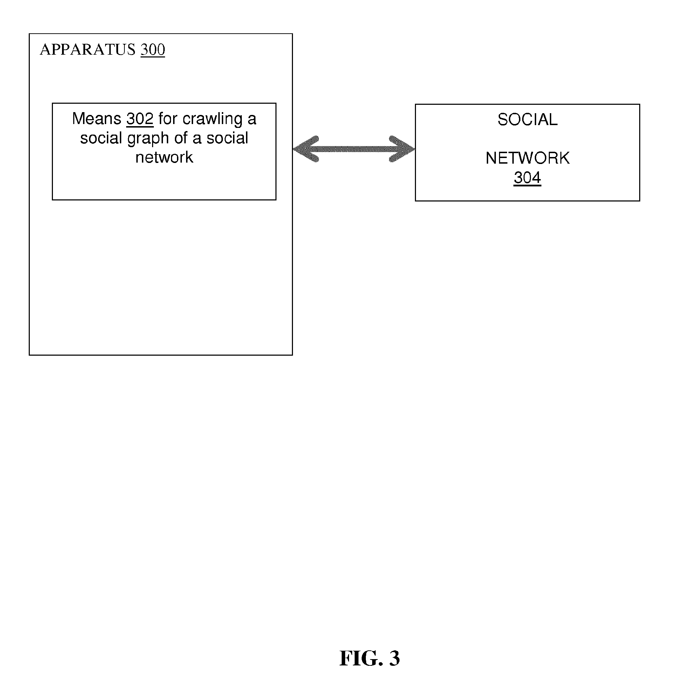

FIG. 3 depicts a more detailed implementation of means 204 for collecting user-related parameters from one or several social networks. The user-related parameters may be collected by means 302 for crawling a social graph of a social network and collecting information about the relations between users in the social network. This information may comprise, but it is not limited to, a statistical analysis of friendship relationships in the social network and, for example, the degree of distance between users in the social network, the number of times a certain user has visited a particular webpage, the number of times a user's webpage has been viewed, from which locations, in which languages, etc. The user-related parameter may also comprise data related to check-ins. This information represents the attendance of users to POIs that has been recorded by the social network.

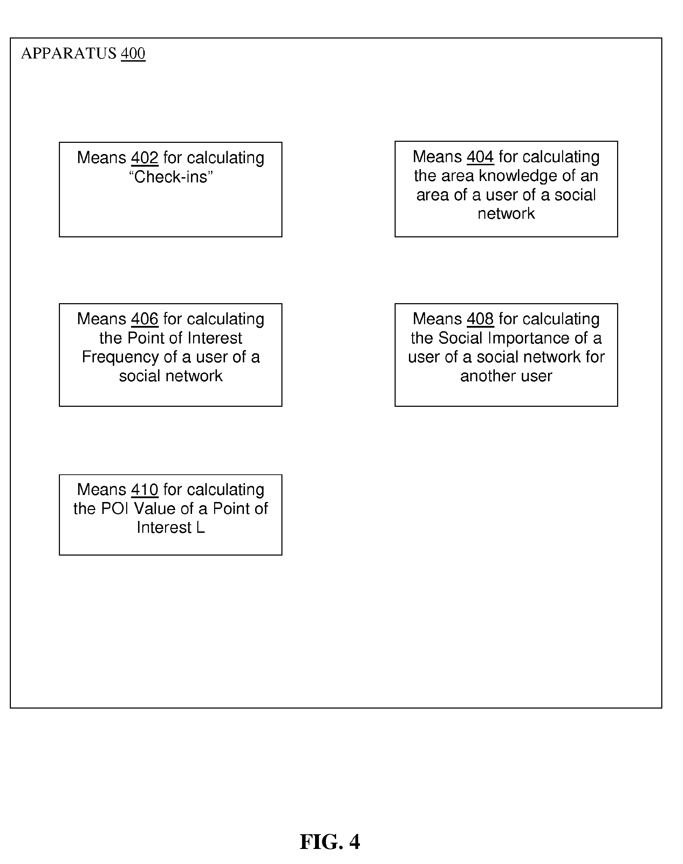

FIG. 4 depicts a more detailed implementation of means 210 for determining and assigning POI values, POIV, for each POI in the recommendation set, based upon user-related parameters. The means 210 for determining POI values may comprise means for aggregating at least two user-related parameters counts in order to aggregate a total POI value to be assigned to each POI in the recommendation set. The means 210 for determining POI values may further comprise means 402 for determining check-ins, which represent the attendance of a user U to a certain POI CI tU,L, as an absolute number or a frequency within a period in the last t days.

The means 210 for determining POI values may further comprise means 404 for determining the area knowledge of a user of a social network. The area knowledge is a parameter which represents how familiar a user is within a specific location, and its objective is to provide an indication whether the area is a home zone or a foreign zone the user is visiting. In case the location is a geographical position, this can be represented, for example, by the postal code. The area knowledge parameter of a user respect to a POI may be determined as:

$$AK_U^t = \frac{\sum_{l\,in\,same\,Postal\,Code}\ CI_{U,L}^t}{\sum\ CI_{U,L}^t}$$

[expression 1]

Means 210 may further comprise means 406 for determining the POI frequency LFtU,U' of a user of a social network. In an exemplary but not limiting embodiment of the invention the POI frequency of a user respect to a POI may be determined as:

$$LF_{U,L}^t = \frac{CI_{U,L}^t}{\sum\ CI_{U,L}^t}$$

[expression 2]

Means 210 may further comprise means 408 for determining the social importance SItU,U' of a user of a social network for another user. The social importance of a user for another user may be determined as:

| if(Distance (U, U') > 5 ‖ Distance (U, U') < 0) | $SI_{U,U\prime}^{t} = Degree_{U\prime}$ |
|---|---|
| Else | $SI_{U,U\prime}^{t} = \dfrac{Degree_{U\prime}}{\dfrac{Distance(U,U')}{5}}$ |
| | [expression 3] |

where (DegreeU) represents the number of connections that U has in its social network and Distance (U,U') represents the minimum number of hops necessary to reach U' from U using the shortest path in their social network. If it does not exist a path connecting U and U' Distance (U,U') < 0.

Means 210 may further comprise means 410 for determining the POI value LVtL,U of a POI L in at instant t. The POI value of a location for a user may be determined as:

$$LV_{L,U}^{t} = \frac{\sum_{users\ in\ L} (\frac{LF_{U,L}^{t} * AK_{U,L}^{t}}{SI_{U,U\prime}^{t}})}{|users|}$$

[expression 4]

where |users| represents the number of users that have "checked-in" to that Location.

The resulting value aggregates the information of detected locations in the surroundings considering the social distance of the specific user to the users that visited that location (social information), and their familiarity with the area of the location (geographical information). Hence the recommender system provides an optimized recommendation of POI catered for each particular user, enabling a more pleasant experience both while physically or virtually navigating looking for a preferred POI, as well as a more pleasant experience whilst enjoying the physical or virtual POI. In addition a reduced set of recommended sites is provided for perusal, which results in mobile device processing power being saved and less transmission bandwidth being utilized.

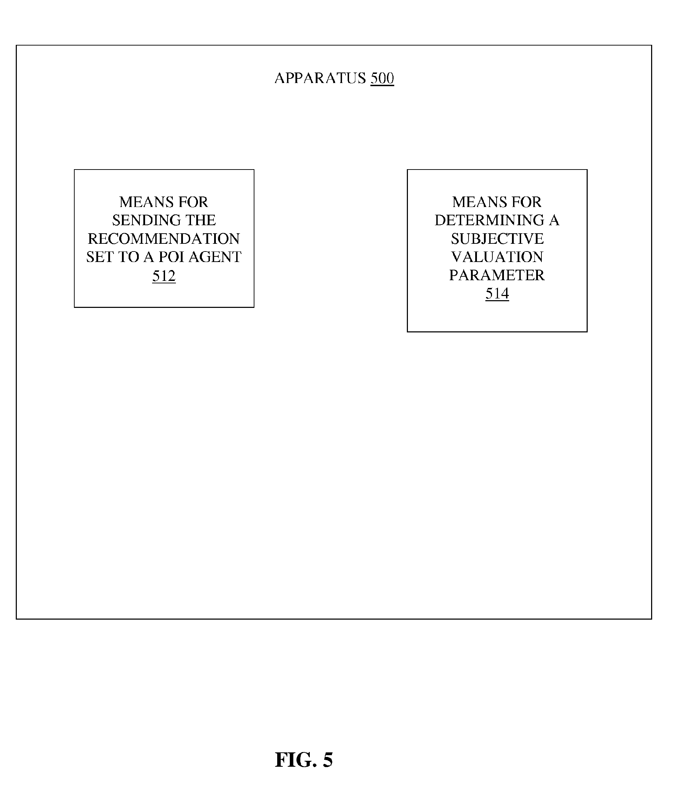

FIG. 5 depicts a recommender apparatus 500 according to another embodiment of the present invention. The recommender apparatus of this embodiment takes into account additionally to the other aspects mentioned, a parameter representing the desire for third party POI owners to promote their POI. The recommender apparatus 500 in this embodiment is the same as the recommender apparatus in the embodiment of FIG. 3, further comprising means 514 for determining a subjective valuation parameter. The subjective valuation parameter is set by a particular POI owner and is used by the recommender apparatus to allocate a higher or lower POI value to a particular POI. It is subjective in the sense that it is not linked to any particular aspect of a particular user. It is simply set by a user who wishes to provide a higher ranking in the recommendation set. The subjective valuation parameter is determined as:

$$SVP_{L}^{U} = (LV_{L,U}^{t} * \frac{1}{e^{MetersDistance(u,L)}}) * BaseLine$$

[expression 5]

Since the task of determining which users to advertise to which POI can become cumbersome as the number of users increase, the present invention proposes a POI agent that facilitates a POI owner to focus on a specific target customer base. Recommender apparatus 500 therefore further comprises means 512 for sending the recommendation set to a POI agent 550. The owner of a POI sends a subjective valuation parameter to the POI agent. The POI agent communicates with the means for ordering the recommendation set to prompt the set to be re-ordered based on the subjective valuation parameter. After the re-ordering, the recommendation set is transmitted to and displayed for the end user's knowledge.

At this point the recommendation set is updated with current information, comprising updating the user-related parameters, receiving any new parameters, as well as receiving an update on current or new subjective valuation parameters. The POI agent prompts the re-ordering of the recommendation set again, which is displayed in updated format. This sequence of events defines an iterative loop which allows the POI recommender apparatus not only to be adaptive to the changes in the location of the user, or the changes in user-related parameters, but also in receiving constantly changing subjective valuation parameters. Hence the recommender system provides a dynamic POI recommendation to the end user which takes into account not only the user's related parameters, which can also advantageously represent its social presence in cyber-space, but also optimized to cater for POI owner desires.

In this embodiment, the POI agent defines a policy specifying the type of strategy that is going to be implemented (e.g. a maximum number of users, highest influencers, users whose profile match a specific characteristic). One such strategy might be to accept subject valuations from every POI owner equally. In another strategy preference may be given to those POI owners which provide a good or service catered to the particular user's needs as defined by its user-related parameters. During this step, the POI agent decides 550a - 550z, within a predetermined time period, what strategy to implement. The time period may be set to be longer or shorter in order to define the level of adaptability of the algorithm to the changes in input parameters. In particular, a shorter or longer time period may be chosen in order to set the rate at which subjective valuations may be received and processed. In another aspect of this embodiment, a plurality of POI agents 550a - 550z promote their location in their immediate vicinity. In such a case, the present invention implements an auction protocol.

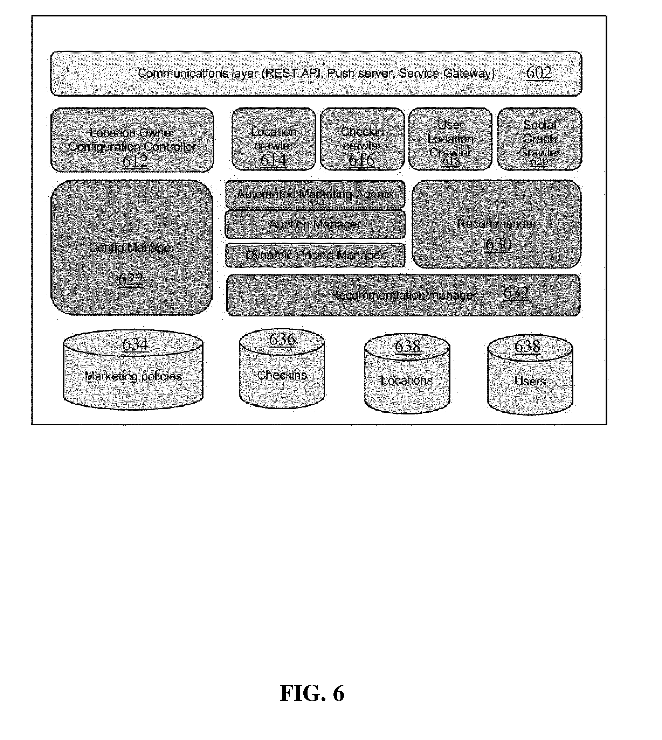

FIG. 6 depicts a block diagram of the apparatus 600 according to another aspect of the present invention. On top of the model the communication layer 602 embodies the components responsible for handling the interactions of the system with the external world. In one implementation this module is compliant with the architectural principles of REST (Representational State Transfer). However, it will apparent to those skilled in the art that several different implementation schemes may be used.

The second layer of the system comprises several modules. This controller's layer comprises the components responsible for running the core system logics. The location owner configuration controller 612 handles the requests related to the tuning of marketing policies by the POI owners. The location crawler 614 retrieves locations from a locations database 638, which in a preferred embodiment is an external database, which will be provided to recommender apparatus 230. Check-in crawler 616 retrieves check-ins from check-ins database 636, which in a preferred embodiment is an external database, which will be provided to recommender apparatus 230. User location crawler 618 retrieves geo-located users from users database 636, which will be provided to recommender system 230. The social graph crawler 620 retrieves social graphs of users from the social network 642, which will be provided to recommender system 630.

The third layer of the system comprises several modules. These components hold responsibility for the computationally intensive operations related to the generation of recommendations. The configuration manager 622 manages the information flow between the different modules, and the configuration of the information in the recommendation set, as well as its updating, ordering and re-ordering. The POI agent 624 executes the strategies after receiving the subjective valuation parameters from the POI owners. Recommender 630 generates lists of recommendations according to the present invention. Recommendation manager 632 orchestrates the components responsible for triggering and managing the main system processes.

The fourth layer of the system comprises several data modules. These components maintain the data used by the components in upper layers. Strategy component 634 stores data related to the preferences of POI owners for particular strategies. This component stores information about the preferred profile of the users a POI owner would like to be advertised to and data related to the subjective valuation parameters they are assign for their goods and services. This component is accessed by upper layer components. Check-ins component 636 stores data related to the attendance to locations of users of a social network. This component is accessed by upper layer component Check-in crawler 616. The information in this component comprises ordered triplets (user, location, time) indicating the attendance of users of the present invention that are present in a social network to a location included in the system at a specified moment in time.

Locations component 638 stores data related to locations included in the system of present invention. This component is accessed by upper layer component location crawler 614. The information in this component comprises data related to the location in the system of the present invention, e.g. type of location (cinema, restaurant, bookstore, etc.) as well as services provided, exact location, prices, etc.

User's component 642 stores data related to users. This component stores data related to the social relations of users within a social network. Examples of this data are a graph of their inter-relations within a social network, data related to interests of the users (photography, culture, travels, shopping, etc.), etc. This component is accessed by social graph crawler 620 in order to retrieve information about how the users of the system of the present invention are inter-related. This information will thereafter be provided to other components of the system of the present invention, e.g. POI agents 624, so that they can perform taking into consideration how some users will most likely represent a higher influence for other users.

It is to be understood by the skilled person in the art that the various embodiments, realizations, and aspects of the invention have been so drafted with the aim of disclosing the invention in a concise manner. This does not mean that the intention is to limit the scope of the disclosure to the precise combination of embodiments, realizations, and aspects as drafted. On the other hand, the intention is that the different features of the inventive concepts described may be readily understood to be combinable as would be derived from a clear and objective reading of the disclosure by one of ordinary skill in the art.

Furthermore, it is to be understood that the embodiments described herein may be implemented by hardware, software, firmware, middleware, microcode, or any combination thereof. When the systems and/or methods are implemented in software, firmware, middleware or microcode, program code or code segments, a computer program, they may be stored in a machine-readable medium, such as a storage component. A computer program or a code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted using any suitable means including memory sharing, message passing, token passing, network transmission, or others.

For a software implementation, the techniques described herein may be implemented with modules (e.g., procedures, functions, and so on) that perform the functions described herein. The software codes may be stored in memory units and executed by processors. The memory unit may be implemented within the processor or external to the processor, in which case it can be communicatively coupled to the processor through various means as is known in the art. Further, at least one processor may include one or more modules operable to perform the functions described herein.

Moreover, various aspects or features described herein may be implemented, on one hand, as a method or process or function, and on the other hand as an apparatus, a device, a system, or an article of manufacture using standard programming and/or engineering techniques. The expression "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., EPROM, card, stick, key drive, etc.). Additionally, various storage media described herein can represent one or more devices and/or other machine-readable media for storing information. The term "machine-readable medium" can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However one of ordinary skill in the art may recognize that many further combinations and permutations of various embodiments are possible within the general inventive concept clearly derivable from an objective reading of the present disclosure. Accordingly, the described embodiments are intended to embrace all such alterations, modifications and variations that fall within scope of the appended claims.

The various logical blocks, modules, and circuits described in connection with the embodiments disclosed herein may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The methods or algorithms described may be embodied directly in hardware, in a software module executed by a processor, or a combination of the two. A software module may reside in RAM memory, flash memory, ROM memory, EPROM memory, EEPROM memory, registers, hard disk, a removable disk, a CD-ROM, or any other form of storage medium known in the art.

Those skilled in the art should appreciate that the foregoing discussion of one or more embodiments does not limit the present invention, nor do the accompanying figures. Rather, the present invention is limited only by the following claims.

## Claims

1. An apparatus for providing point of interest, POI, recommendations to a user, the apparatus comprising:

   means for determining a location of at least one user;
   means for retrieving at least one POI based on the determined location of the at least one user;
   means for constructing a recommendation set with all the retrieved POIs for each user;
   means for assigning at least one point of interest value for each POI in the recommendation set;
   means for ordering the at least one POI according to the at least one determined point of interest value; and
   means for providing the ordered set to the respective one of the at least one user.

2. The apparatus of claim 1, wherein the means for determining a location is configured to determine a physical location such as a geographical position.

3. The apparatus of claim 2, further comprising means for collecting user-related parameters from at least one social network, and wherein the means for assigning at least one POI value determines the at least one value based on the user-related parameters.

4. The apparatus of claim 2, wherein the means for assigning at least one POI value comprises means for aggregating at least two user-related parameters for determining a POI value.

5. The apparatus of claim 3, wherein the means for ordering the at least one POI further comprises means for constructing a re-ordered and reduced recommendation set based on the locations with the highest values and a threshold limiting the total number of POIs in the recommendation set.

6. The apparatus of claim 3, wherein the user-related parameter comprises an area knowledge parameter representing how familiar a user is with a specific area.

7. The apparatus of claim 3, wherein the wherein the user-related parameter comprises a POI frequency representing the frequency a user visits a specific area.

8. The apparatus of claim 3, wherein the user-related parameter comprises any single one, or combination of, a past history parameter of a specific user, current location of a user, a social distance parameter to other users, a user expertise parameter of the area where the recommendation is going to be provided

9. The apparatus according to claim 3, further comprising means for receiving a subjective valuation parameter from at least one POI owner, wherein the means for determining at least one POI value updates the determined POI value according to the received at least one subjective valuation parameter.

10. The apparatus of claim 3, wherein the user-related parameter comprises a social importance parameter representing the level of acquaintance between two users.

11. The apparatus of claim 3, wherein the means for collecting comprises means for crawling a social graph of a social network and collecting information about the relations between users in the social network.

12. The apparatus of claim 3, wherein the means for collecting comprises means for performing a statistical analysis of friendship relationships in the social network, to determine the degree of distance between users in the social network, and/or the number of times a certain user has visited a particular webpage, and/or the number of times a user's webpage has been viewed.

13. The apparatus of claim 3, wherein the means for determining POI values may comprise means for determining check-ins representing the attendance of a user to a certain POI.

14. A method for providing point of interest, POI, recommendations to a user, the method comprising:

> determining a location of at least one user;
> retrieving at least one POI based on the determined location of the at least one user;
> constructing a recommendation set with all the retrieved POIs for each user;
> determining at least one point of interest value for each POI in the recommendation set;
> ordering the at least one POI according to the at least one determined point of interest value; and
> providing the ordered set to the respective one of the at least one user.

15. A computer readable medium comprising instructions for, once executed on a computer, to perform the steps of:

> determining a location of at least one user;
> retrieving at least one POI based on the determined location of the at least one user;
> constructing a recommendation set with all the retrieved POIs for each user;
> determining at least one point of interest value for each POI in the recommendation set;
> ordering the at least one POI according to the at least one determined point of interest value; and

providing the ordered set to the respective one of the at least one user.

POI 1
120

POI 2
120

POI N
120

SOCIAL NETWORK TO WHICH USERS (U, U', U'', …) ARE CONNECTED
130

Users connected in 2nd degree

Directly connected users

Users connected in 3rd degree

Directly connected users

Directly connected users

**FIG. 1**

APPARATUS 200

Means for determining the position of at least one user
202

Means for gathering user-related parameters (URPs) from at least one social network 204

Means for retrieving POIs within a vicinity of the current location of a user
206

Means for constructing a Recommendation Set
208

Means for calculating a POI value, for each POI in the Recommendation Set
210

Means for ordering the POIs according to the calculated POI values
212

Means for providing the final set to the user
214

FIG. 2

APPARATUS 300

Means 302 for crawling a social graph of a social network

SOCIAL

NETWORK
304

**FIG. 3**

APPARATUS 400

Means 402 for calculating "Check-ins"

Means 404 for calculating the area knowledge of an area of a user of a social network

Means 406 for calculating the Point of Interest Frequency of a user of a social network

Means 408 for calculating the Social Importance of a user of a social network for another user

Means 410 for calculating the POI Value of a Point of Interest L

FIG. 4

APPARATUS 500

| MEANS FOR SENDING THE RECOMMENDATION SET TO A POI AGENT 512 | MEANS FOR DETERMINING A SUBJECTIVE VALUATION PARAMETER 514 |

**FIG. 5**

Communications layer (REST API, Push server, Service Gateway) 602

Location Owner Configuration Controller 612

Location crawler 614

Checkin crawler 616

User Location Crawler 618

Social Graph Crawler 620

Automated Marketing Agents 624

Auction Manager

Dynamic Pricing Manager

Config Manager 622

Recommender 630

Recommendation manager 632

634 Marketing policies

636 Checkins

638 Locations

638 Users

**FIG. 6**

Europäisches
Patentamt

European
Patent Office

Office européen
des brevets

## EUROPEAN SEARCH REPORT

Application Number

EP 12 19 9235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/233238 A1 (BRAGINSKY DAVID EDWARD [US] ET AL) 13 September 2012 (2012-09-13)<br>* abstract *<br>* paragraph [0002] *<br>* paragraph [0010] - paragraph [0013] *<br>* paragraph [0016] *<br>* paragraph [0019] - paragraph [0023] *<br>* paragraph [0025] - paragraph [0026] *<br>----- | 1-15 | INV.<br>G06Q30/02 |
| X | WO 2012/122362 A2 (MOORE JUSTIN [US]; WEISS NOAH [US]; LEE BENJAMIN N; SKLAR MAX ELLIOT;) 13 September 2012 (2012-09-13)<br>* abstract *<br>* page 14, line 11 - page 15, line 4 *<br>* page 15, line 24 - page 16, line 17 *<br>* page 17, line 4 - page 18, line 18 *<br>* page 22, line 8 - line 15 *<br>----- | 1-15 | |
| A | US 2009/012955 A1 (CHU JOHN [US] ET AL) 8 January 2009 (2009-01-08)<br>* abstract *<br>* paragraph [0004] *<br>* paragraph [0006] - paragraph [0007] *<br>* paragraph [0025] - paragraph [0030] *<br>----- | 1-15 | TECHNICAL FIELDS SEARCHED (IPC)<br><br>G06Q<br>G01C |

The present search report has been drawn up for all claims

| Place of search | Date of completion of the search | Examiner |
|---|---|---|
| The Hague | 10 May 2013 | Moltenbrey, Michael |

EPO FORM 1503 03.82 (P04C01)

**ANNEX TO THE EUROPEAN SEARCH REPORT
ON EUROPEAN PATENT APPLICATION NO.**

EP 12 19 9235

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2013

| Patent document cited in search report | Publication date | Patent family member(s) | Publication date |
|---|---|---|---|
| US 2012233238 A1 | 13-09-2012 | US 2012233238 A1<br>WO 2012122204 A2 | 13-09-2012<br>13-09-2012 |
| WO 2012122362 A2 | 13-09-2012 | US 2013060635 A1<br>WO 2012122362 A2 | 07-03-2013<br>13-09-2012 |
| US 2009012955 A1 | 08-01-2009 | NONE | |

EPO FORM P0459

For more details about this annex : see Official Journal of the European Patent Office, No. 12/82